# EUROPEAN PATENT SPECIFICATION

(11) **EP 3 001 789 B1**
(45) Date of publication and mention of the grant of the patent: **01.02.2017**
(21) Application number: 14727722.2
(22) Date of filing: 12.05.2014
(51) Int. Cl.: A23D 9/00, A23L 5/00, A23L 7/00, A23L 9/00, A23L 21/00, A23L 29/00

(54) **STRUCTURED OIL COMPOSITIONS**
STRUKTURIERTE ÖLZUSAMMENSETZUNGEN
COMPOSITIONS D'HUILE STRUCTURÉE

(30) Priority: 16.05.2013 EP 13168069
(43) Date of publication of application: 06.04.2016
(73) Proprietor: Nestec S.A., 1800 Vevey (CH)
(72) Inventor: NAGY, Kornél, CH-1005 Lausanne (CH)
(74) Representative: Kirk, Martin John
(86) International application number: PCT/EP2014/059593
(87) International publication number: WO 2014/184118

(56) References cited:
- EP-A1- 2 057 902
- EP-A2- 0 910 955
- WO-A1-94/19961
- US-A1- 2004 146 609
- US-A1- 2004 197 459
- OSBORN H T ET AL: "Structured lipids-Novel fats with medical, nutraceutical and food applications", COMPREHENSIVE REVIEWS IN FOOD SCIENCE AND FOOD SAFETY, INSTITUTE OF FOOD TECHNOLOGISTS, CHICAGO, IL, US, vol. 3, 1 January 2002 (2002-01-01), pages 110-120, XP002419911, ISSN: 1541-4337, DOI: 10.1111/J.1541-4337.2002.TB00010.X

## Description

The present invention relates generally to lipid compositions. In particular the invention relates to compositions comprising a structuring agent dispersed in edible fat. Between 0.1 and 30 wt.% of the structuring agent may be dispersed in between 70 and 99.9 wt.% edible fat. The structuring agent may comprise at least 10 wt.% of diacylglycerols having a very long chain saturated fatty acid residue with a chain length between 26 and 32 carbon atoms inclusive. Further aspects of the invention are a food product comprising the lipid composition; the use of the lipid composition as a moisture barrier in a food product; and a method for preparing the lipid composition. Fats are important ingredients in a wide variety of manufactured foods, cosmetics and pharmaceuticals. The physical properties of fats, such as their melting point or texture, affect which applications they are suitable for. There is increasing interest in being able to structure soft fats or liquid fats to make their physical properties more like those of harder, higher-melting fats. For example, structured fats with firm textures can be used in topical delivery of pharmaceutically active liquid fats or fat-soluble medicaments. In food manufacturing, structured soft fats may be used to replace hard fats whilst maintaining many of the hard fats' desired textural properties. This can provide a means to improve the nutritional quality of consumers' diets.

The hardness and the melting profile of a fat are linked to its degree of saturation. Highly saturated fats are generally solid at ambient conditions, e.g. palm fat or any hydrogenated vegetable fat. Fats which are liquid at ambient conditions generally have low levels of saturation, e.g. a sunflower oil.

Fats with a high solid fat content at room temperature are commonly referred to as hard fats. These fats traditionally have a variety of applications in foods, such as "shortenings" in bakery products, fillings in sandwich biscuits, or as coatings, for example chocolate-like coatings on ice cream or bakery products. Fats with high saturated fatty acid (SFA) content are generally used in these products to impart desired textural and sensorial properties. In biscuits, cakes and pastries, the hard fats create a desirable "short" (not-elastic) texture; in biscuit fillings the hard fats hold the biscuit together, as well as contributing to the eating texture; and in coatings, the hard fats provide an appealing snap when the coating is bitten into, and a prolonged flavour release and pleasant mouth cooling as the fat melts in the mouth. Such fats may be for example hydrogenated coconut oils or palm kernel oils.

However, fats containing high amounts of SFAs are believed to have negative health effects, for example being linked to an enhanced risk for cardiovascular diseases. In recent years, this has led to an increasingly negative consumer perception of saturated fats.

Hydrogenation is a commonly used technique to obtain hard fats from unsaturated liquid fats. Besides the resulting high SFA content, the presence of trans unsaturated fatty acids in partially hydrogenated fats has become an important health issue. Trans fatty acids have been associated with cardiovascular diseases as well as diabetes and some types of cancer such as breast cancer.

Hence it would be desirable to replace high SFA hard fats, or hydrogenated fats containing significant levels of trans fatty acids, by predominantly unsaturated fats having a low solid fat content. However, it is evident that in many applications it is not possible to use a liquid fat instead of a solid fat. Using a liquid fat will dramatically alter physical properties such as taste, texture and overall appearance, and a product such as a sandwich biscuit may simply fall apart without the solid fat in the biscuit filling.

One approach is to add an ingredient to the soft fat which creates a structure within the overall composition. Patent WO95/22257 describes fat blends, suitable for food products, comprising diacylglycerols and triacylglycerols. The diacylglycerols predominantly had either two unsaturated fatty acids with at least 16 carbon atoms, or one unsaturated fatty acid with at least 16 carbon atoms together with a saturated fatty acid with between 12 and 24 carbons. Such fat blends could be used to produce fillings which were harder and had lower saturated fat than a commercial filling fat Biscuitine SF™, although they were found to have a reduced flavour release.

EP2057904 describes lipid compositions with matrix building ingredient including a mixture of diacylglycerols having long chain saturated fatty acid residues with between 14 to 24 carbon atoms inclusive. The patent describes the use of hydrogenated vegetable oil as a source of saturated fatty acids to produce distearoyl-glycerol (C18:0-C18:0), as an example matrix building ingredient. At solid fat contents greater than about 10% the compositions had a waxy mouthfeel.

Structured fat compositions are also disclosed in US 2004/146609; EP 2 057 902; and WO 94/19961, for example.

For lipid compositions used in foods, the consumer is not willing to compromise on the organoleptic properties of the food in order to reduce consumption of SFA. Taste, texture and overall appearance are such organoleptic properties. In addition, consumers may prefer not to buy products containing hydrogenated fats. Accordingly there is an ongoing need to provide low SFA lipid compositions, having good organoleptic properties. It is an object of the present invention to provide structured lipid compositions that have a low SFA content.

An object of the present invention is to improve the state of the art and to provide an improved solution to overcome at least some of the inconveniences described above, or at least to provide a useful alternative. Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to".

The object of the present invention is achieved by the subject matter of the independent claims. The dependent claims further develop the idea of the present invention.

Accordingly, the present invention provides in a first aspect a lipid composition comprising between 0.1 and 30 wt.% of a structuring agent dispersed in between 70 and 99.9 wt.% edible fat wherein the structuring agent comprises at least 10 wt.% of diacylglycerols having a very long chain saturated fatty acid residue with a chain length between 26 and 32 carbon atoms inclusive.

In a second aspect, the invention relates to the use of the lipid composition of the invention as a moisture barrier in a food product. A third aspect of the invention relates to a food product comprising the lipid composition of the invention. A further aspect of the invention is a method for preparing the lipid composition of the invention comprising preparing a structuring agent comprising at least 10 wt.% of diacylglycerols having a very long chain saturated fatty acid residue with a chain length between 26 and 32 carbon atoms ("carbons") inclusive; melting the structuring agent;
combining the structuring agent with an edible fat to form a mixture; homogenizing the mixture; and cooling the mixture.

The inventors surprisingly found that diacyclglycerols having a saturated fatty acid residue with a chain length between 26 and 32 carbons inclusive could be used to structure edible fat. Such diacylglycerols have not previously been reported as having this property. For example, the diacylglycerols of the invention were able to form an organogel when added to a liquid fat. The resulting lipid composition kept its form at room temperature despite having a low saturated fat content. The melting point of the diacylglycerols in the lipid composition according to the invention may be adjusted to suit the desired application by selecting appropriate chain lengths for the fatty acid residues. In particular, the melting points of diacylglycerols having one saturated fatty acid residue with a carbon chain C26-C32 can be adjusted by selecting an appropriate chain length for the second fatty acid residue. For example, diacylglycerols having one saturated fatty acid residue with a carbon chain C26-C32 and a second saturated fatty acid residue with carbon chain C4-C12 may provide a structuring agent which melts below 90 °C which is useful when incorporating the structuring agent in materials such as fillings which often have ingredients which are adversely affected at higher temperatures.
Figure 1 shows the averaged mass spectrum of the fatty acid profile of a hydrolysed carnauba wax and beeswax blend, extracted into petrolether. OH-FA Cn being an omega-hydroxy fatty acid with n carbons, FA Cn being a fatty acid with n carbons. The y axis is the relative abundance of the ions [signal %] and the x axis is the mass-to-charge ratio (*m*/*z*).
Figure 2 shows the partitioning of omega-hydroxy fatty acids (OH-FA) and normal fatty acids (FA) between a methanol **□** and *n*-hexane ■ phase, measured by mass spectrometry. The height of the bars is the relative abundance [signal %].
Figure 3 shows the averaged mass spectrum of the fatty acid profile of the n-hexane phase after purification of very long chain fatty acids. The y axis is the relative abundance of the ions [signal %] and the x axis is the mass-to-charge ratio (*m*/*z*).
Figure 4 shows a high resolution mass spectrum of the C36 diacylglycerol - an example of the identification process. The y axis is the relative abundance of the ions [signal %] and the x axis is the mass-to-charge ratio (*m*/*z*). Mass errors are given in brackets confirming the elemental composition of the peaks.

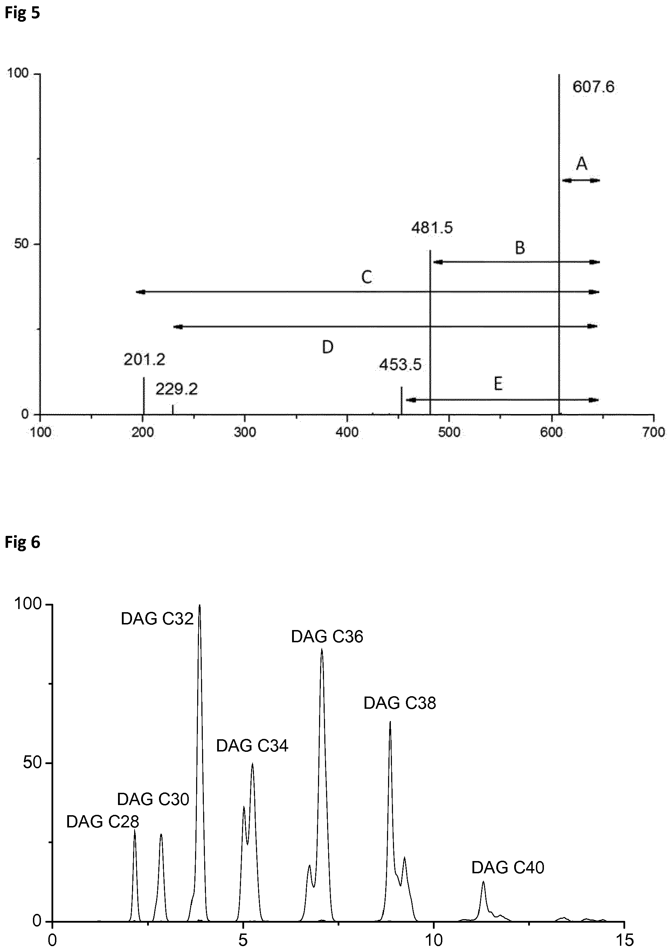

Figure 5 shows the product ion spectrum (fragmentation pattern) of the C36 diacylglycerol - an example of the identification process. By convention, a C36 diacylglycerol has a total of 36 carbon atoms in its fatty acid chains. There are a further 3 carbon atoms in the glycerol backbone. The y axis is the relative abundance of the ions [signal %] and the x axis is the mass-to-charge ratio (*m*/*z*). Characteristic neutral losses confirm the structure/identity of the diacylglycerol and are indicated as double arrows. A is the loss of H₂O+NH₃, B is the loss of C8 fatty acid, C is the loss of C28 fatty acid, D is the loss of C26 fatty acid and E is the loss of C10 fatty acid.
Figure 6 shows the combined high resolution ion chromatograms of representative diacylglycerols obtained after the inter-esterification process. The y axis is the relative abundance of the ions [signal %] and the x axis is the retention time in minutes.
Figure 7 shows the composition of diacylglycerols in the structuring agent, with signal abundance as % of total acylglycerol on the y axis. The number of carbons in the fatty acid chains of the diacylglycerol is plotted on the x axis.
Figure 8 is a photograph of the structuring agent prepared in Example 1 added to oil at 20 °C.
Figure 9 is a photograph of the white gel formed after the oil and structuring agent were heated to 90 °C, homogenized and then cooled to 20 °C, showing that the gel remains in its container when the container is inverted.
Figure 10 is a plot of force (g) against distance (mm) for oil + 5% structuring agent (◆) and oil alone (■) as measured by a texture analyzer.

Consequently the present invention relates in part to a lipid composition comprising between 0.1 and 30 wt.% of a structuring agent dispersed in between 70 and 99.9 wt.% edible fat wherein the structuring agent comprises at least 10 wt.% of diacylglycerols having a very long chain saturated fatty acid residue with a chain length between 26 and 32 carbons inclusive.

Structuring agents are materials which, when added to another material, create or enhance a structure within the material. Structuring agents may act by creating a framework within a material, so altering the material's physical properties, for example by making the material more rigid. In the present invention, the term fat refers to lipidic solids, semisolids or liquids that are water-insoluble esters of glycerol with fatty acids. Fats are the chief component of animal adipose tissue and many plant seeds. Diacylglycerols, sometimes called diglycerides, are lipid molecules consisting of a glycerol residue connected by ester linkages to two fatty acid residues. The diacylglycerols used in the invention may have their two fatty acid chains in adjacent glycerol positions (1,2 isomers) or terminal glycerol positions (1,3 isomers). Very long chain fatty acids are fatty acids with a chain length of 26 carbon atoms or longer. They occur naturally in plants and animals.

It is an advantage that the lipid composition of the invention may provide many of the physical attributes of hard fats, such as not flowing under gravity, without containing trans-unsaturated fatty acids or high levels of saturated fatty acids. The lipid composition of the invention may be free of trans-unsaturated fatty acids. As the structuring agent used in the invention itself comprises saturated fatty acids it is advantageous that it may be added at low levels. The lipid composition may comprise between 0.1 and 30 wt.% structuring agent, for example between 0.5 and 20 wt.%, for further example between 1 and 10 wt.%. The lipid composition according to the invention may have less than 70 wt.% saturated fatty acids, for example less than 50 wt.% saturated fatty acids, for further example less than 20 wt.% saturated fatty acids, for still further example less than 15 wt.% saturated fatty acids. The wt.% of saturated fatty acids is calculated as the percentage weight of saturated fatty acids, whether esterified to glycerol molecules or as free fatty acids, in the total weight of fatty acids of the lipid composition. Typically this is analysed by converting the lipid composition to fatty acid methyl esters and quantifying them using chromatography. Such determinations are routinely performed in oils and fats laboratories [W.W. Christie, Gas Chromatography and Lipids - A Practical Guide, The Oily Press, Dundee, UK. (1989)].

The higher the content of diacylglycerols with very long chain saturated fatty acids in the structuring agent, the more effective it is, and the less structuring agent need to be dispersed in the lipid edible fat to achieve the same effect. The lipid composition of the present invention may comprise at least 0.5 wt.% of diacyclglycerols having a very long chain saturated fatty acid residue with a chain length between 26 and 32 carbons inclusive, for example it may comprise at least 1 wt.% of diacylglycerols having a very long chain saturated fatty acid residue with a chain length between 26 and 32 carbons inclusive.

The structuring agent may comprise at least 10 wt.% of diacylglycerols having a very long chain saturated fatty acid residue with a chain length between 26 and 32 carbons inclusive, for example it may comprise at least 15 wt.% of diacylglycerols having a very long chain saturated fatty acid residue with a chain length between 26 and 32 carbons inclusive, for further example it may comprise at least 30 wt.% of diacyclglycerols having a very long chain saturated fatty acid residue with a chain length between 26 and 32 carbons inclusive. The structuring agent may comprise at least 50 wt.% of diacylglycerols of which at least 20 wt.% have a very long chain saturated fatty acid residue with a chain length between 26 and 32 carbons inclusive. For example the structuring agent may comprise at least 60 wt.% of diacylglycerols of which at least 30 wt.% have a very long chain saturated fatty acid residue with a chain length between 26 and 32 carbons inclusive.

The physical properties of the structuring agent, such as its melting point, may be adjusted by varying the chain length of the second fatty acid residue of the diacylglycerols. The diacylglycerols of the invention, having a very long chain saturated fatty acid residue, may have a medium chain saturated fatty acid residue with a chain length between 4 and 12 carbons inclusive as their other fatty acyl chain. At least 60 wt.% of the diacyclglycerols having a very long chain saturated fatty acid residue may have a medium chain saturated fatty acid residue with a chain length between 4 and 12 carbons inclusive as their other fatty acyl chain. For example, at least 75 wt.% of the diacylglycerols having a very long chain saturated fatty acid residue may have a medium chain saturated fatty acid residue with a chain length between 4 and 12 carbons inclusive as their other fatty acyl chain. Such combinations may provide effective structuring without causing an unacceptable waxy mouthfeel or requiring very high temperatures to melt it for dispersal into the edible fat. The structuring agent may comprise at least 50 wt.% of diacylglycerols of which at least 12 wt.% have one saturated fatty acid residue with a chain length between 26 and 32 carbons inclusive and a second saturated fatty acid residue with a chain length between 4 and 12 carbons inclusive. For example the structuring agent may comprise at least 60 wt.% of diacylglycerols of which at least 18 wt.% have one saturated fatty acid residue with a chain length between 26 and 32 carbons inclusive and a second saturated fatty acid residue with a chain length between 4 and 12 carbons inclusive. The lipid composition of the present invention may comprise at least 0.3 wt.% of diacylglycerols having one saturated fatty acid residue with a chain length between 26 and 32 carbons inclusive and a second saturated fatty acid residue with a chain length between 4 and 12 carbons inclusive. For example the lipid composition of the present invention may comprise at least 0.6 wt.% of diacylglycerols having one saturated fatty acid residue with a chain length between 26 and 32 carbons inclusive and a second saturated fatty acid residue with a chain length between 4 and 12 carbons inclusive. For further example the lipid composition of the present invention may comprise at least 1.5 wt.% of diacylglycerols having one saturated fatty acid residue with a chain length between 26 and 32 carbons inclusive and a second saturated fatty acid residue with a chain length between 4 and 12 carbons inclusive.

The diacylglycerols used in the invention may be predominantly 1,3-diacylglycerols. 1,3- diacylglycerols have their two fatty acid chains in terminal glycerol positions. 1,3-diacylglycerols may cause a lipid composition to solidify more quickly at room temperature than 1,2-diacylglycerides. In the composition according to the invention, more than 60 wt.% of the diacylglycerols having a very long chain saturated fatty acid residue may be 1,3-diacylglycerols, for example more than 80% may be 1,3 diacyclglycerols. Enzyme catalysed interesterification may be used to produce preferential isomers of diacylglycerols. An example of a 1,3-diacylglycerol according to the invention is shown as formula (I) below, having one saturated fatty acid residue with a chain length of 28 carbons and one saturated fatty acid residue with a chain length of 8 carbons, the fatty acid residues being in terminal glycerol positions.

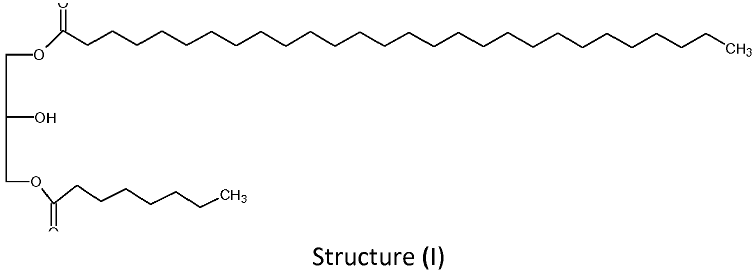

The edible fat of the present invention may have a solid fat content higher than 50% at 20° C. For example the edible fat may be a fat suitable for forming a coating, such as an ice cream coating or confectionery coating. Solid fat contents may be measured by pulse NMR, for example according to the IUPAC Method 2.150. The edible fat may be selected from the group consisting of palm oil, palm kernel oil, coconut oil, cocoa butter, illipe, sal, shea, and combinations of these. The structuring agent of the present invention may advantageously be added to alter the texture of an edible fat, for example an edible fat having a solid fat content higher than 50% at 20° C. The structuring agent of the invention may provide resistance to deformation when products comprising the lipid composition are exposed to hot conditions, or it may provide an improved snap for products comprising the lipid composition having a solid fat content higher than 50% at 20° C, for example a chocolate-like material. Snap is the desirable textural property of chocolate-like materials which causes them to break cleanly, often with a distinctive noise, when bent in the hands or bitten into.

The edible fat of the present invention may be a liquid oil. In the context of the present invention, the term liquid oil refers to fats which are essentially liquid at room temperature, for example having less than 3% solid fat content at 20 °C. It is advantageous to be able to structure liquid oils. Monounsaturated and polyunsaturated fats are liquid at room temperature. Both of these types of fats can be beneficial in the diet, for example reducing blood cholesterol, which can decrease the risk of heart disease. By structuring these liquid oils they can be used to replace less healthy harder fats in a number of applications. The structuring agent may transform a liquid oil, altering its physical properties such that its fluidity will decrease and its rheological properties will be similar to those of harder fats.

The liquid oil of the present invention may be any commercial vegetable oil. The liquid oil may be selected from the group consisting of sunflower oil, soybean oil, corn oil, olive oil, canola oil, and combinations of these. The liquid oil may be a high oleic vegetable oil, including specifically tailored algal or fungal oils. High oleic oils are those having over 70% of their fatty acids as oleic acid. Oleic acid is a common monounsaturated fat in human diet. Monounsaturated fat consumption has been associated with decreased low-density lipoprotein cholesterol.

The lipid composition of the invention may be an organogel. Organogels are bi-continuous colloidal systems that co-exist as a micro heterogeneous solid and organic liquid phase. Surprisingly, the inventors found that the lipid composition of the invention may form such an organogel, the structuring agent being the micro heterogeneous solid and liquid oil being the organic liquid phase. The rheology of the liquid oil, which has a low viscosity and no elasticity, is transformed by the formation of the organogel, so that the resulting lipid composition resembles a solid fat, having a solid-like character and being elasto-plastic. Edible lipid oil organogels are sometimes called oleogels.

The lipid composition of the invention may be used as a moisture barrier in a food product. Moisture migration is a problem in many food products, for example when there are regions in the product which are high in moisture and others which are dryer. Moisture will tend to equilibrate throughout the product. Specifically, moisture migrates until the water activity (A_{w}) of the different components is the same. Water activity is a measure of the amount of unbound water available. Moisture migration can have a deleterious effect on a product over its shelf-life. For example, consumers generally expect a wafer biscuit (having a low A_{w}) to have a crisp texture. In a food product where the wafer is in contact with a moist filling, such as a dairy mousse, moisture will gradually migrate from the mousse to the wafer, causing the wafer to become soggy. One method to prevent or delay moisture migration is to add a moisture barrier between the components having different A_{w}. Fats are hydrophobic and so provide a suitable material for a moisture barrier. Hard fats are typically used as moisture barriers, as they are less likely to be physically displaced within the food product and they adhere well to surfaces, for example to form a moisture barrier inside a wafer ice cream cone. Unfortunately many hard fats have the dietary disadvantages discussed above, such as high levels of saturated fatty acids. It is advantageous that the lipid composition of the invention may be used to form a moisture barrier, providing a more healthy dietary material. The edible lipid oil organogels of the present invention have a further advantage when used as a moisture barrier. Hard fats are brittle, and so when they are used as a moisture barrier they may develop cracks. Once a moisture barrier has a crack, moisture can penetrate through the crack and the effectiveness of the moisture barrier is greatly reduced, or even completely lost. The organogels of the present invention have a continuous liquid oil phase which acts as an effective moisture barrier. However, unlike liquid oils, the organogels have a solid-like structure and so are not easily physically displaced within the food product. Furthermore, unlike hard fats the organogels are not brittle and do not crack, which makes them much more effective as moisture barriers.

The lipid composition of the invention may advantageously be used in food products, for example as a replacement for fats high in saturated fatty acids. A further embodiment of the invention may be a food product comprising the lipid composition. The food products may be a confectionery product, a culinary product, a dairy product, a nutritional formula, a breakfast cereal or an ice cream.

Confectionery products include biscuits; cakes; pastries; sugar confectionery, such as toffees; and fat-based confectionery products. Fat-based confectionery products should be understood as referring to products comprising dark, milk or white chocolate; or to chocolate analogues containing milk fat, milk fat replacers, cocoa butter replacers, cocoa butter substitutes, cocoa butter equivalents, non metabolizable fats or any mixture thereof; or Caramac™ sold by Nestlé comprising non-cocoa butter fats, sugar and milk; nut pastes such as peanut butter and fat; and/or praline among others. Fat-based confectionery products may include sugar, milk derived components, and fat and solids from vegetable or cocoa sources, or any other usual ingredient for chocolate such as lecithin for example, in different proportions. The lipid composition of the invention may be comprised within fillings, for example fillings inside a hollow fat-based confectionery shell, extruded fillings, or fillings between biscuits. In biscuit fillings the fat must function as an adhesive and glue the filling to the biscuit. The fat should also have enough structure to avoid being squeezed out of the sides of the product during consumption. The lipid composition of the invention can provide these functions, replacing hard fats but without undesirable high levels of saturated fatty acids. Lipid compositions according to the invention where the edible fat is a liquid oil are particularly suitable for fillings between low density biscuits such as wafers, where a soft textured filling with a rapid flavour release may be desired.

The food product of the invention may be a culinary product. Culinary products are food compositions typically prepared or used in kitchens. The lipid composition may for example be used to replace fats in the formulation of creamy soups, soft concentrated bouillons or hard concentrated bouillons, e.g. bouillon cubes. The solid-like rheology of the lipid composition helps to keep the ingredients of the bouillon cube together, but without the high saturated fat acid content of conventional hard fats. The food product of the invention may be a dairy product, for example a cheese spread, or the lipid composition of the invention may be used to coat inclusions such as cereals, dried fruit or nuts which are dispersed in yoghurt, the lipid composition acting as a moisture barrier and preventing the inclusions from becoming soft too quickly.

The food product may be a nutritional formula, for example to provide important nutritional oils in a more solid-like form, thus being easier and more enjoyable to eat. The nutritional formula may be a complete nutritional formula which provides sufficient types and levels of macronutrients (protein, fats and carbohydrates) and micronutrients to be sufficient as a sole source of nutrition for the subject to which it is administered. The nutritional formula may also provide partial nutrition, to act as a supplement to the existing diet of the subject.

The food product may be a breakfast cereal, for example hollow extruded cereal pieces containing a filling comprising the lipid composition of the invention. Usually, such breakfast cereals containing a filling are prepared by co-extrusion. A cereal shell is extruded together with the filling, and then crimped and/or cut at the extrusion die outlet to form individual pieces. The lipid composition of the invention has the advantage when used in the cereal filling that it has a solid-like character and so does not flow out of the cereal shell and provides a clean cut. The food product may be an ice cream, for example with the lipid composition replacing some or all of the hard fats in an ice cream based on vegetable fats. The lipid composition may be comprised within the fat-based coating of a water-ice on a stick, or the lipid composition may be used as a moisture barrier inside an ice-cream wafer cone.

A further aspect of the current invention is a method for preparing the lipid composition of the invention comprising preparing a structuring agent comprising at least 10 wt.% of diacylglycerols having a very long chain saturated fatty acid residue with a chain length between 26 and 32 carbons inclusive; melting the structuring agent; combining the structuring agent with an edible fat to form a mixture; homogenizing the mixture; and cooling the mixture. The mixture may for example be cooled to a temperature below the melting point of the structuring agent. Homogenization may be carried out by any of the methods commonly used in the food industry, for example a high shear mixer may be used, or the edible fat and molten structuring agent may be passed through a static mixer. The structuring agent and edible fat may further be mixed with other ingredients, for example sugar, cocoa powder, milk powder, flavourings and colours. Cooling may take place after incorporation of the structuring agent and edible fat mixture into another product, for example the mixture may be sprayed onto a wafer to form a moisture barrier coating and then cooled.

The structuring agent may be prepared by interesterifying a source of very long chain saturated fatty acids having a chain length between 26 and 32 carbons inclusive with a source of medium chain saturated fatty acids having a chain length between 4 and 12 carbons inclusive in the presence of glycerol and/or acylglycerols. Acylglycerols have a structure where a glycerol "backbone" is esterified to between 1 and 3 fatty acid residues. As is well known by a skilled person, the relative proportions of the fatty acids and glycerol backbone present in the interesterification will control the resulting composition of acylglycerols according to stoichiometry. The glycerol backbone may originate from glycerol itself, or be part of acylglycerol molecules in the mixture. Some or all of the acylglycerols in the mixture may also provide the source of very long chain saturated fatty acids having a chain length between 26 and 32 carbons inclusive and/or the source of medium chain saturated fatty acids having a chain length between 4 and 12 carbons inclusive. As the proportion of glycerol backbone to fatty acids increases, more mono and di-acylglycerols will be obtained from the interesterification. The structuring agent may be prepared by interesterifying very long chain saturated fatty acids having a chain length between 26 and 32 carbons inclusive with a source of medium chain saturated fatty acids having a chain length between 4 and 12 carbons inclusive in the presence of glycerol.

In the context of the present invention the term interesterification includes the reaction of glycerol or a partial glyceride with a fatty acid, often called esterification. The interesterification may use any of the techniques known in the art. For example the interesterification process may be a random interesterification with an alkaline catalyst or a lipase catalyst. The interesterification may be a directed interesterification where the interesterification is directed towards particular positions on the glycerol moiety. The interesterification process may be directed by lipases which catalyse the interesterification reaction at the 1- and 3-positions of the glycerol moiety.

The source of medium chain saturated fatty acids having a chain length between 4 and 12 carbons inclusive may be selected from the group consisting of medium chain triglyceride oil, lauric fat, milk fat and combinations of these. The medium chain triglyceride oil, lauric fat and milk fat may be fractions of these materials. The source of very long chain saturated fatty acids having a chain length between 26 and 32 carbons inclusive may be a composition obtained by saponification of wax, for example beeswax and/or carnauba wax. Preferably the composition obtained by saponification of wax is subjected to a purification step before providing the source of very long chain saturated fatty acids, for example to remove any omega-hydroxy fatty acids present.

Those skilled in the art will understand that they can freely combine all features of the present invention disclosed herein. In particular, features described for the product of the present invention may be combined with the method of the present invention and vice versa. Further, features described for different embodiments of the present invention may be combined. Where known equivalents exist to specific features, such equivalents are incorporated as if specifically referred to in this specification. Further advantages and features of the present invention are apparent from the figures and non-limiting examples.

### Example 1: Production of a structuring agent composition comprising diacylglycerols Saponification

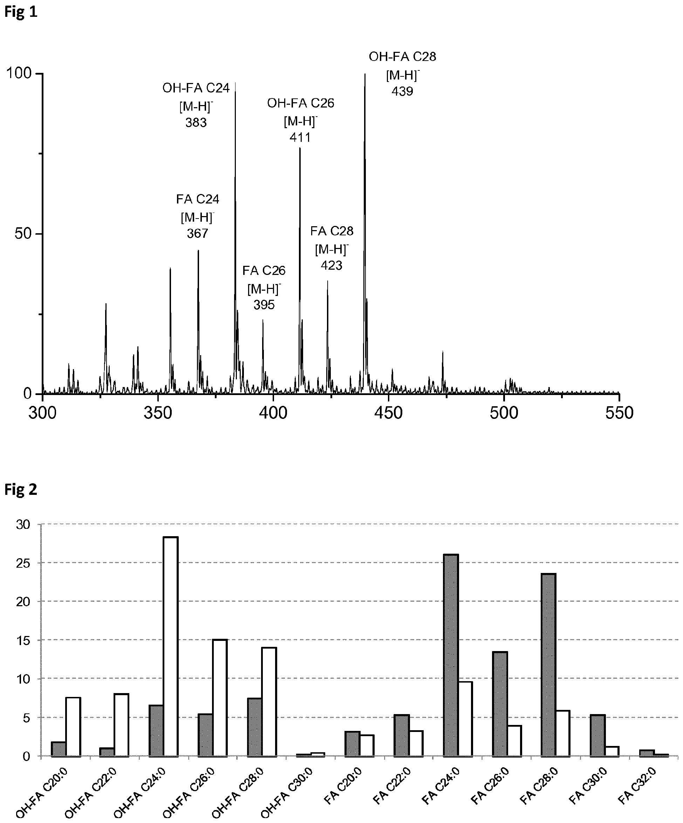

A commercially available carnauba wax and beeswax blend (Capol^{®} 1295, Capol GmbH, Germany) was hydrolysed by mixing 10 g of wax with 4 g of potassium hydroxide and 200 mL of ethanol. The mixture was heated to 90 degrees in a rotary evaporator and continuously rotated at low speed for 2 h. The evaporated ethanol was retrieved and the hydrolysed solution was transferred into a 1 L separating funnel. The hydrolysed mixture was subjected to liquid-liquid extraction (LLE) by adding 300 ml of petrolether and 300 ml of water. The aqueous phase was controlled for pH and was neutralized by stepwise addition of 1 M hydrochloric acid. The neutralized mixture was shaken for 2 min and was allowed to rest for 2 min to separate. The petrolether phase was taken for further work and evaporated to dryness under nitrogen. Analytical characterization by liquid chromatography - mass spectrometry (LC-MS, for details see below) of this dry material confirmed the liberation of very long chain fatty acids (VLCFAs) and omega-hydroxy-fatty acids (Figure 1).

### Liquid chromatography

An Accela 1250 liquid chromatograph (ThermoFisher Scientific, Bremen, Germany) equipped with a Agilent Poroshell 120 EC-C18 (2.7 µm particle size, 2.1 x 250 mm) was used for separation of analytes. Solvent A was 1 mM ammonium-formate and 2 µM sodium-formate solubilized in methanol, whereas solvent B was isopropanol: n -hexane 1:1. The gradient was as following: 0-3 min isocratic 100% A at 600 µl/min; 3-15 min gradient to 90% A at 600 µl/min; 15-20 min gradient to 5% A and to 400 µl/min; 20-23 min isocratic 5% A at 400 µl/min; 23-26 min gradient to 100% A and to 600 µl/min; 26-33 min equilibrate at 100% A at 600 µl/min.

### Mass spectrometry

An LTQ-Orbitrap XL hybrid mass spectrometer (Thermo-Fisher Scientific, Bremen, Germany) equipped with Atmospheric pressure chemical ionization (APCI) and Electrospray ionization (ESI) was used. Analysis of free fatty acids was performed in negative ion mode, while the analysis of diacylglcyerols was performed in positive ion mode. APCI nebulizer probe was maintained at 450°C, corona current was 15 µA. ESI nebulizer probe was maintained at 350°C, capillary voltage was 5 kV. Nebulizer and auxiliary gas flows were nitrogen at 40 and 20 units, respectively. Tube lens was adjusted to 100 V in negative ion mode and to 110 V in positive ion mode, other parameters were the typical values optimized during calibration. The Orbitrap was operated at 60,000 resolution in an *m*/*z* 100-2,000 range. Precursor ion isolation, fragmentation, and detection were performed in the linear ion trap at unit mass resolution. From the generated molecular ions only the ammoniated adducts were fragmented. Accumulation time was 50 ms, normalized collision energy was 30%, activation Q value was 0.250, activation time was 30 ms.

### Purification of very long chain fatty acids

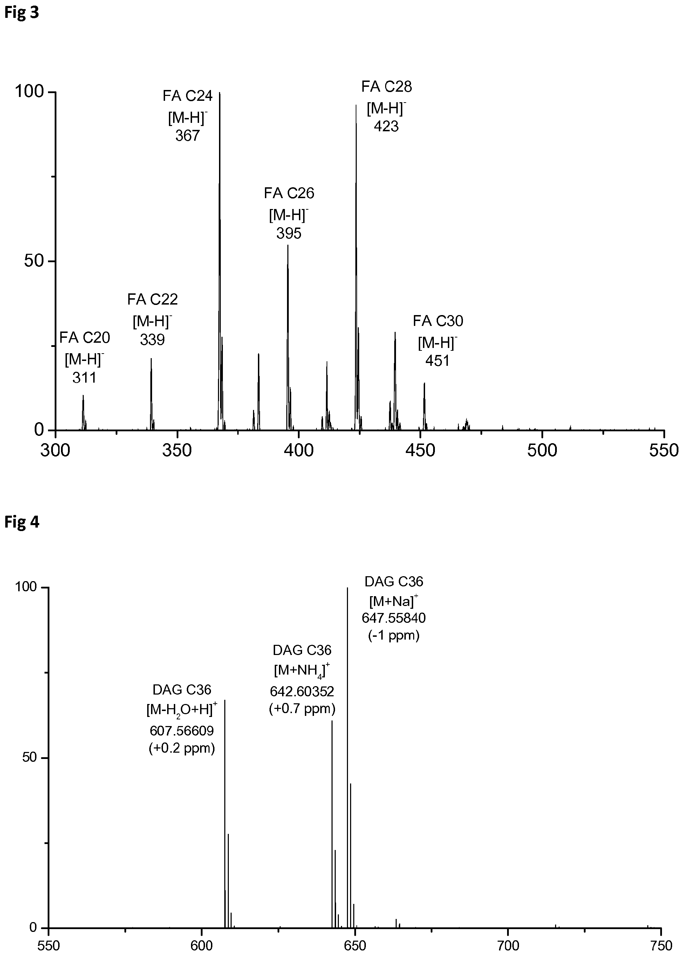

The petrolether fraction obtained as described above was re-solubilized in a 1:1 mixture of methanol and n-hexane in a separating funnel and LLE was performed to purify the VLCFAs. Following phase separation, the methanol was discarded and the remaining n-hexane phase was washed 3 more times with methanol. The resulting n-hexane fraction was then separated and dried with nitrogen. Mass spectrometric characterization of this dry material confirmed the enrichment of VLCFAs and reduction of other wax derived substances e.g. omega-hydroxy-fatty acids, see Figure 2. The Figure illustrates how efficiently the omega-hydroxy fatty acids can be eliminated from the saturated fatty acids that remain in the hexaneous phase. The averaged single stage mass spectrum of the liberated VLCFAs is presented in Figure 3 showing deprotonated molecular ions and C24:0, C26:0 and C28:0 fatty acids as main constituents. Note that using additional fractionation steps the profile of VLCFAs can be fine-tuned for example to enrich longer chain fatty acids.

### Interesterification

The purified VLCFA fraction was then inter-esterified with medium chain triacylglyceride (MCT) oil (Abitec Corp., Ohio, US) containing ∼60% C8:0 and ∼30% C10:0 fatty acids as determined by transmethylation followed by GC-FID analysis [W.W. Christie, Gas Chromatography and Lipids - A Practical Guide, The Oily Press, Dundee, UK. (1989)]. The relative proportion of the VLCFAs, MCT oil and glycerol was adjusted to equimolar stochiometry to reach the desired final diacylglycerol (DAG) composition. 2% sodium methanolate was added as base and the reaction was carried out at 240 °C for 2 h to ensure equilibrium. Mass spectrometric characterization of this reaction mixture confirmed the formation of desired DAG and the diminishing of starting components (MCT and VLCFAs). Single and tandem stage mass spectrometric characterization confirmed the identity of the diacylglycerols and the incorporation of VLCFAs by showing the correct molecular ions (Figure 4) and showing the fragmentation patterns that reflect the losses of the respective fatty acid constituents, see Figure 5. A combined high resolution ion chromatogram of representative DAGs for the reaction mixture is shown in Figure 6. Due to the randomization process other DAGs, with higher and lower molecular weights, are also present in the mixture.

### Purification of structuring agent

The reaction mixture was purified to remove the base and neutralize the pH. The mixture was subjected two times to LLE using 800 mL acidified water:n-hexane at a ratio of 1:1. The separated n-hexane phase was dried under nitrogen yielding the desired structuring agent composition. The structuring agent was solid at room temperature (around 20 °C) and melted at approximately 65 °C.

### Composition of structuring agent

Relative quantification of mono-, di- and tri-acylglycerols was performed by integrating the observable signals of the analytes: integrating the sodiated signals of monoacylglycerols; the ammoniated and soldiated signals of triacylglycerols; and the ammoniated, sodiated adducts and spontaneous water loss signals of diacylglycerols. Equal response was assumed for all analytes. Diacylglycerols were found to make up 68% of the structuring agent.

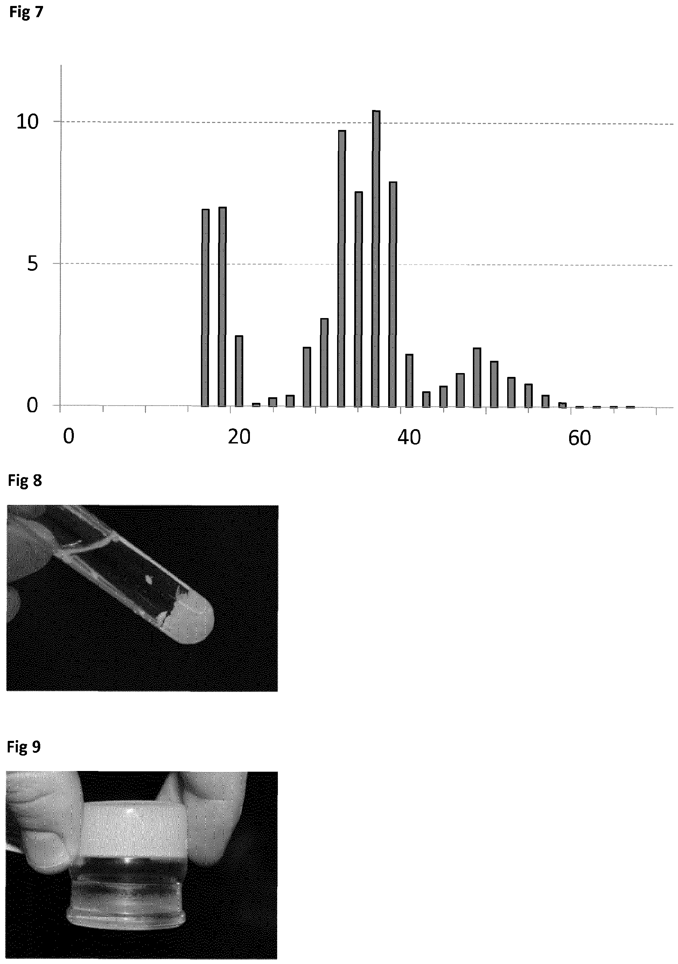

The composition of diacylglycerols in the structuring agent is shown in Figure 7. The signal abundance as a percentage of the total mono-, di- and tri-acylglycerols is plotted against the total number of carbons in the acyl chains (CN). A minimum quantity of diacyclglycerols having a very long chain saturated fatty acid residue with a chain length between 26 and 32 carbons can be calculated based on the overall fatty acid composition and the distribution in Figure 7. At least 24 wt.% of the structuring agent is diacyclglycerols having one fatty acid residue with a chain length between 26 and 32 carbons inclusive. The actual level will be higher as, for example, a proportion of the CN34 signal shown in Figure 7 will be due to a diacylglycerol with one C26 fatty acid and one C8 fatty acid, however the CN34 signal is not included in the calculation as it will also contain diacylglycerols with one C24 fatty acid and one C10 fatty acid. By similar calculation, at least 18 wt.% of the structuring agent is diacylglycerols having one saturated fatty acid residue with a chain length between 26 and 32 carbons inclusive and a second saturated fatty acid residue with a chain length between 4 and 12 carbons inclusive.

### Example 2: Preparation of a structured lipid composition

The structuring agent prepared in Example 1 was added at a level of 5% by weight to a liquid oil, the oil being a 1:1 mixture of sunflower oil (Lesieur Cristal S.A., Morocco) and high oleic sunflower oil (Henry Lamotte Oils GmbH, Germany). When initially added to the oil at room temperature, the structuring agent was not miscible with the oil (Figure 8). The oil and structuring agent were then heated to 90 °C and homogenized by briefly vortexing the mixture. The mixture was held at this temperature for 2 min, before being cooled to 20 °C. The mixture formed a white gel on cooling (Figure 9) and retained its shape at room temperature. The lipid composition formed contained 5% of a structuring agent and had a total saturated fatty acid content of 14%.

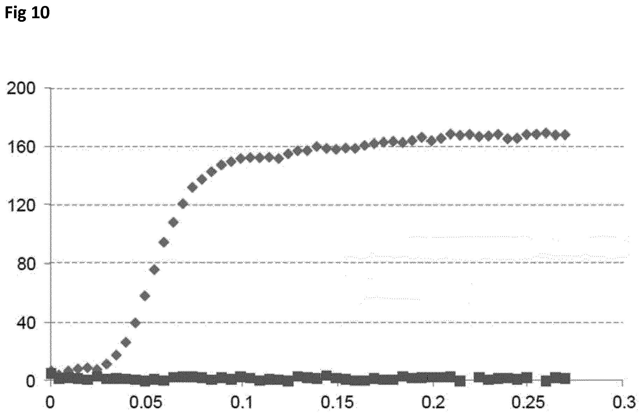

The texture of the gel was measured using a TA.XT plus texture analyzer (Stable Microsystems Ltd., Surrey, England) and compared to the texture of the liquid oil without the structuring agent. The analyzer was equipped with an aluminum probe (20 mm diameter) and was operated using Texture Exponent 32 software. The "Distance" target mode was used for acquisition and the trigger type was set to "Auto force". Trigger force was set to 0.05 N, the penetration distance was set to 5 mm; test speed was 2 mm/s. The gel was found to show a resistance to penetration, not observed for the oil. The penetration force reached a maximum after the probe penetrated 0.1 mm into the gel (Figure 10). The structured lipid composition had a solid-like character being elasto-plastic.

## Claims

1. Lipid composition comprising between 0.1 and 30 wt.% of a structuring agent dispersed in between 70 and 99.9 wt.% edible fat wherein the structuring agent comprises at least 10 wt.% of diacylglycerols having a very long chain saturated fatty acid residue with a chain length between 26 and 32 carbon atoms inclusive.

2. A lipid composition according to claim 1 wherein at least 60 wt.% of the diacylglycerols having a very long chain saturated fatty acid residue have a medium chain saturated fatty acid residue with a chain length between 4 and 12 carbon atoms inclusive as their other fatty acyl chain.

3. A lipid composition according to claim 1 or claim 2 wherein the lipid composition has less than 70 wt.% saturated fatty acids.

4. A lipid composition according to any one of claims 1 to 3 wherein the diacylglycerols having a very long chain saturated fatty acid residue are predominantly 1,3 diacylglycerols.

5. A lipid composition according to any one of claims 1 to 4 wherein the edible fat is a liquid oil.

6. A lipid composition according to claim 5 wherein the liquid oil is selected from the group consisting of sunflower oil, soybean oil, corn oil, olive oil, canola oil, and combinations of these.

7. A lipid composition according to claim 5 or claim 6 wherein the liquid oil is a high oleic vegetable oil.

8. A lipid composition according to any one of claims 5 to 7 wherein the lipid composition is an organogel.

9. Use of the lipid composition of any one of claims 1 to 8 as a moisture barrier in a food product.

10. Food product comprising the lipid composition of any one of claims 1 to 8.

11. Food product according to claim 10 wherein the food product is a confectionery product, a culinary product, a dairy product, a nutritional formula, a breakfast cereal or an ice cream.

12. Method for preparing the lipid composition of any one of claims 1 to 8 comprising preparing a structuring agent comprising at least 10 wt.% of diacylglycerols having a very long chain saturated fatty acid residue with a chain length between 26 and 32 carbon atoms inclusive; melting the structuring agent; combining the structuring agent with an edible fat to form a mixture; homogenizing the mixture; and cooling the mixture.

13. A method according to claim 12 wherein the structuring agent is prepared by interesterifying a source of very long chain saturated fatty acids having a chain length between 26 and 32 carbon atoms inclusive with a source of medium chain saturated fatty acids having a chain length between 4 and 12 carbon atoms inclusive in the presence of glycerol and/or acylglycerols.

14. A method according to claim 13 wherein the source of medium chain saturated fatty acids having a chain length between 26 and 32 carbon atoms inclusive is selected from the group consisting of medium chain triglyceride oil, lauric fat, milk fat and combinations of these.

15. A method according to claim 13 or claim 14 wherein the source of very long chain saturated fatty acids having a chain length between 26 and 32 carbon atoms inclusive is a composition obtained by saponification of wax.

## Patentansprüche

1. Lipidzusammensetzung, umfassend zwischen 0,1 und 30 Gew.-% eines strukturierenden Mittels, das in zwischen 70 und 99,9 Gew.-% essbarem Fett dispergiert ist, wobei das strukturierende Mittel mindestens 10 Gew.-% Diacylglycerole mit einem sehr langkettigen gesättigten Fettsäurerest mit einer Kettenlänge zwischen 26 und einschließlich 32 Kohlenstoffatomen umfasst.

2. Lipidzusammensetzung nach Anspruch 1, wobei mindestens 60 Gew.-% der Diacylglycerole mit einem sehr langkettigen gesättigten Fettsäurerest einen mittelkettigen gesättigten Fettsäurerest mit einer Kettenlänge zwischen 4 und einschließlich 12 Kohlenstoffatomen als ihre andere Fettacylkette haben.

3. Lipidzusammensetzung nach Anspruch 1 oder Anspruch 2, wobei die Lipidzusammensetzung weniger als 70 Gew.-% gesättigte Fettsäuren aufweist.

4. Lipidzusammensetzung nach einem der Ansprüche 1 bis 3, wobei die Diacylglycerole mit einem sehr langkettigen gesättigten Fettsäurerest vorwiegend 1,3 Diacylglycerole sind.

5. Lipidzusammensetzung nach einem der Ansprüche 1 bis 4, wobei das essbare Fett ein flüssiges Öl ist.

6. Lipidzusammensetzung nach Anspruch 5, wobei das flüssige Öl ausgewählt ist aus der Gruppe bestehend aus Sonnenblumenöl, Sojabohnenöl, Maisöl, Olivenöl, Rapsöl und Kombinationen davon.

7. Lipidzusammensetzung nach Anspruch 5 oder Anspruch 6, wobei das flüssige Öl ein oleinreiches Pflanzenöl ist

8. Lipidzusammensetzung nach einem der Ansprüche 5 bis 7, wobei die Lipidzusammensetzung ein Organogel ist.

9. Verwendung der Lipidzusammensetzung nach einem der Ansprüche 1 bis 8 als Feuchtigkeitsbarriere in einem Nahrungsmittelprodukt.

10. Nahrungsmittelprodukt, umfassend die Lipidzusammensetzung nach einem der Ansprüche 1 bis 8.

11. Nahrungsmittelprodukt nach Anspruch 10, wobei das Nahrungsmittelprodukt ein Konfektprodukt, ein kulinarisches Produkt, ein Milchprodukt, eine Säuglingsnahrung, ein Getreidefrühstück oder eine Eiscreme ist.

12. Verfahren zur Herstellung der Lipidzusammensetzung nach einem der Ansprüche 1 bis 8, umfassend das Herstellen eines strukturierenden Mittels, umfassend mindestens 10 Gew.-% Diacylglycerole mit einem sehr langkettigen gesättigten Fettsäurerest mit einer Kettenlänge zwischen 26 und einschließlich 32 Kohlenstoffatomen; Schmelzen des strukturierenden Mittels; Kombinieren des strukturierenden Mittels mit einem essbaren Fett zum Bilden einer Mischung; Homogenisieren der Mischung; und Kühlen der Mischung.

13. Verfahren nach Anspruch 12, wobei das strukturierende Mittel hergestellt wird durch Umestern einer Quelle von sehr langkettigen gesättigten Fettsäuren mit einer Kettenlänge zwischen 26 und einschließlich 32 Kohlenstoffatomen mit einer Quelle von gesättigten Fettsäuren mit mittellangen Ketten, die eine Kettenlänge zwischen 4 und einschließlich 12 Kohlenstoffatomen aufweisen in Gegenwart von Glycerol und/oder Acylglycerolen.

14. Verfahren nach Anspruch 13, wobei die Quelle von gesättigten Fettsäuren mit mittellangen Ketten mit einer Kettenlänge zwischen 26 und einschließlich 32 Kohlenstoffatomen ausgewählt ist aus der Gruppe bestehend aus mittelkettigem Triglyceridöl, Laurinfett, Milchfett und Kombinationen davon.

15. Verfahren nach Anspruch 13 oder Anspruch 14, wobei die Quelle von sehr langkettigen gesättigten Fettsäuren mit einer Kettenlänge zwischen 26 und einschließlich 32 Kohlenstoffatomen eine Zusammensetzung ist, die durch das Verseifen von Wachs erhalten wird.

## Revendications

1. Composition de lipide comprenant entre 0,1 et 30 % en poids d'un agent structurant dispersé dans une quantité comprise entre 70 et 99,9 % en poids de matière grasse comestible, dans laquelle l'agent structurant comprend au moins 10 % en poids de diacylglycérols ayant un résidu d'acide gras saturé à très longue chaîne avec une longueur de chaîne entre 26 et 32 atomes de carbone inclus.

2. Composition de lipide selon la revendication 1, dans laquelle au moins 60 % en poids des diacylglycérols ayant un résidu d'acide gras saturé à très longue chaîne ont un résidu d'acide gras saturé à chaîne moyenne avec une longueur de chaîne entre 4 et 12 atomes de carbone inclus, en guise d'autre chaîne d'acyle gras.

3. Composition de lipide selon la revendication 1 ou la revendication 2, où la composition de lipide a moins de 70 % en poids d'acides gras saturés.

4. Composition de lipide selon l'une quelconque des revendications 1 à 3, dans laquelle les diacylglycérols ayant un résidu d'acide gras saturé à très longue chaîne sont principalement des 1,3-diacylglycérols.

5. Composition de lipide selon l'une quelconque des revendications 1 à 4, dans laquelle la matière grasse comestible est une huile liquide.

6. Composition de lipide selon la revendication 5, dans laquelle l'huile liquide est choisie dans le groupe constitué d'huile de tournesol, d'huile de soja, d'huile de maïs, d'huile d'olive, d'huile de colza et de leurs combinaisons.

7. Composition de lipide selon la revendication 5 ou la revendication 6, dans laquelle l'huile liquide est une huile végétale à forte teneur en oléique.

8. Composition de lipide selon l'une quelconque des revendications 5 à 7, dans laquelle la composition de lipide est un organogel.

9. Utilisation de la composition de lipide selon l'une quelconque des revendications 1 à 8 en guise de barrière contre l'humidité dans un produit alimentaire.

10. Produit alimentaire comprenant la composition de lipide selon l'une quelconque des revendications 1 à 8.

11. Produit alimentaire selon la revendication 10, où le produit alimentaire est un produit de confiserie, un produit culinaire, un produit laitier, une formule nutritionnelle, une céréale pour petit-déjeuner ou une crème glacée.

12. Procédé de préparation de la composition de lipide selon l'une quelconque des revendications 1 à 8, comprenant la préparation d'un agent structurant comprenant au moins 10 % en poids de diacylglycérols ayant un résidu d'acide gras saturé à très longue chaîne avec une longueur de chaîne entre 26 et 32 atomes de carbone inclus ; la fusion de l'agent structurant ; l'association de l'agent structurant avec une matière grasse comestible pour former un mélange ; l'homogénéisation du mélange ; et le refroidissement du mélange.

13. Procédé selon la revendication 12, dans lequel l'agent structurant est préparé par interestérification d'une source d'acides gras saturés à très longue chaîne ayant une longueur de chaîne entre 26 et 32 atomes de carbone inclus avec une source d'acides gras saturés à chaîne moyenne ayant une longueur de chaîne entre 4 et 12 atomes de carbone inclus en présence de glycérol et/ou d'acylglycérols.

14. Procédé selon la revendication 13, dans lequel la source d'acides gras saturés à chaîne moyenne ayant une longueur de chaîne entre 26 et 32 atomes de carbone inclus est choisie dans le groupe constitué d'huile de triglycéride à chaîne moyenne, de matière grasse laurique, de matière grasse de lait et de leurs combinaisons.

15. Procédé selon la revendication 13 ou la revendication 14, dans lequel la source d'acides gras saturés à très longue chaîne ayant une longueur de chaîne entre 26 et 32 atomes de carbone inclus est une composition obtenue par saponification de cire.
